# EUROPEAN PATENT APPLICATION

(11) **EP 3 547 434 A1**
(43) Date of publication of application: **02.10.2019**
(21) Application number: 16922048.0
(22) Date of filing: 29.12.2016
(51) Int. Cl.: H01M 10/0567, H01M 10/0525

(54) **NON-AQUEOUS ELECTROLYTE OF LITHIUM-ION BATTERY AND LITHIUM-ION BATTERY**

(30) Priority: 25.11.2016 CN 201611055577
(71) Applicant: Shenzhen Capchem Technology Co., Ltd., Shenzhen, Guangdong 518118 (CN)
(72) Inventor: SHI, Qiao, Shenzhen Guangdong 518000 (CN); LIN, Muchong, Shenzhen Guangdong 518000 (CN); ZHANG, Hailing, Shenzhen Guangdong 518000 (CN); HU, Shiguang, Shenzhen Guangdong 518000 (CN); JU, Longlong, Shenzhen Guangdong 518000 (CN)
(74) Representative: Hamer, Christopher K.
(86) International application number: PCT/CN2016/113005
(87) International publication number: WO 2018/094818

(57) **Abstract**

A non-aqueous electrolyte of a lithium-ion battery and a lithium-ion battery. The non-aqueous electrolyte of the lithium-ion battery comprises a non-aqueous organic solvent, a lithium salt, and an additive. The additive comprises unsaturated phosphate as illustrated in the following structural formula (A) and lithium difluorophosphate, wherein in formula (A), R₁ and R₂ are independently selected from C2-C5 unsaturated hydrocarbyl groups, and R₃ is one of C1-C6 saturated hydrocarbyl groups, C1-C6 unsaturated hydrocarbyl groups, and fluorinated hydrocarbyl groups. In the non-aqueous electrolyte of the lithium-ion battery, a combination of lithium difluorophosphate and unsaturated phosphate at least containing two unsaturated groups can reduce impedance of the lithium-ion battery and further improve high-temperature performance of the battery, so that the lithium-ion battery has better low-temperature performance and high-temperature cycling performance.

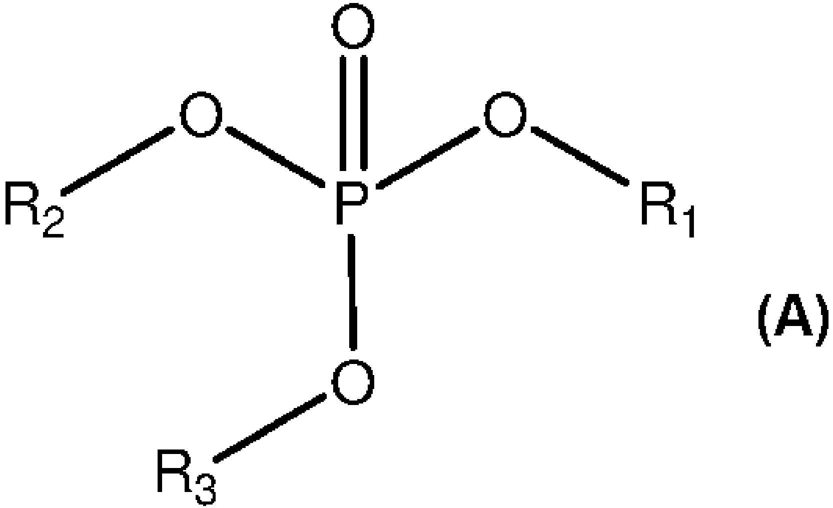

## Description

### Technical Field

The present invention belongs to the technical field of battery electrolyte, and in particular relates to a non-aqueous electrolyte for lithium-ion battery, and to a lithium-ion battery comprising same.

### Background of the Invention

Lithium-ion batteries are a secondary battery that operates by lithium ions moving between the cathode and the anode. Lithium-ion batteries have significant advantages such as high operating voltage, high energy density, low self-discharge rate, and no memory effect. They are widely used in energy storage power systems such as hydropower, heat power, wind power and solar power plants, as well as in electric tools, electric bicycles, electric motorcycles, electric cars, military equipment, aviation and aerospace, among other fields. With the development of new energy vehicles and power storage, people have higher requirements for the performances of lithium-ion power batteries, which entails the development of lithium-ion batteries that better meet the needs. At present, lithium-ion power batteries are deficient in high-temperature cycling life and fail to have both high-temperature performance and low-temperature performance at the same time.

Non-aqueous electrolyte is a key factor affecting the cycling performance and high- and low-temperature performances of a battery. In particular, the additive in the electrolyte plays a decisive role in the performances of the electrolyte. The presently practical non-aqueous electrolytes typically use a conventional film-forming additive such as vinylene carbonate (VC) to ensure excellent cycling performance of the battery. However, VC has poor high-temperature performance and fails to satisfy the high-temperature cycling performance of the battery; and moreover, VC has relatively high impedance, which produces a certain side effect on the low-temperature performance of the battery.A non-aqueous electrolyte comprising a saturated phosphate ester is disclosed in patent documents. Use of a saturated phosphate ester as an electrolyte additive can improve the flame retarding effect of the battery. However, since the saturated phosphate ester has no film-forming effect, it does not have a significant effect on the cycling performance of the battery. Patent document US6919141 (B2) discloses an unsaturated bond-containing phosphate ester additive for non-aqueous electrolyte, which can reduce the irreversible capacity of a lithium-ion battery and improve the cycling performance of the lithium battery. However, those skilled in the art found through research that the passivation film formed by the unsaturated bond-containing phosphate ester additive at the electrode interface has poor conductivity, resulting in a high interface impedance, which significantly degrades the low-temperature performance and prevents the application of non-aqueous lithium-ion batteries in low temperature conditions.

### Summary of the Invention

An object of the present invention is to provide a non-aqueous electrolyte for lithium-ion battery which has good high-temperature cycling performance and low-temperature cycling performance at the same time (that is, has good high- and low-temperature cycling characteristics and low impedance), aiming to solve the problem facing existing lithium-ion battery electrolyte that it is difficult to have good high-temperature cycling performance and low-temperature cycling performance at the same time.Another object of the present invention is to provide a lithium-ion battery comprising the above non-aqueous electrolyte for lithium-ion battery.The present invention is achieved by a non-aqueous electrolyte for lithium-ion battery comprising a non-aqueous organic solvent, a lithium salt and an additive, the additive comprising an unsaturated phosphate ester represented by the following structural formula A and lithium difluorophosphate, 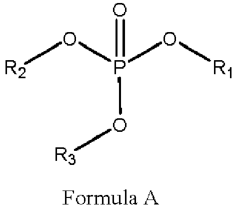 wherein in the formula A, R₁ and R₂ are independently a C2-C5 unsaturated hydrocarbon group, and R3 is one of a C1-C6 saturated hydrocarbon group, a C1-C6 unsaturated hydrocarbon group, and a fluorohydrocarbon group.

Preferably, the unsaturated phosphate ester comprises a compound represented by the following structural formulas 1-5,

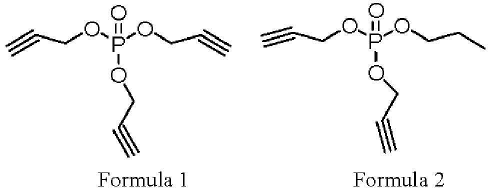

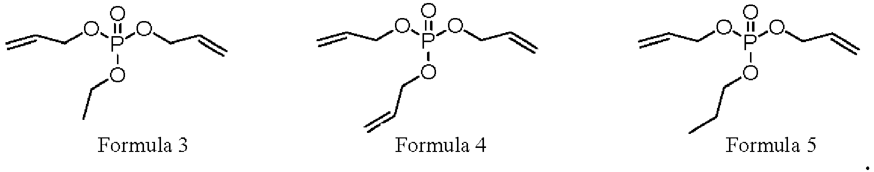

Preferably, the unsaturated phosphate ester is present in an amount of from 0.1 to 2% by weight assuming the total weight of the non-aqueous electrolyte for lithium-ion battery to be 100%.

Preferably, the lithium difluorophosphate is present in an amount of from 0.1 to 2% by weight assuming the total weight of the non-aqueous electrolyte for lithium-ion battery to be 100%.Preferably, the non-aqueous electrolyte for lithium-ion battery further comprises an unsaturated cyclic carbonate. Preferably, the unsaturated cyclic carbonate includes at least one of vinylene carbonate and vinylethylene carbonate.Preferably, the unsaturated cyclic carbonate is present in an amount of from 0.1 to 3% by weight assuming the total weight of the non-aqueous electrolyte for lithium-ion battery to be 100%.And, a lithium-ion battery comprises a cathode, an anode, a separator disposed between the cathode and the anode, and an electrolyte, wherein the electrolyte is the non-aqueous electrolyte for lithium-ion battery described above. Preferably, the cathode includes a positive active material selected from at least one of LiCoO₂, LiNiO₂, LiMn₂O₄, LiCo_{1-y}M_{y}O₂, LiNi_{1-y}M_{y}O₂, LiMn_{2-y}M_{y}O₄ and LiNiₓCo_{y}Mn_{z}M_{1-x-y-z}O₂; wherein M is selected from at least one of Fe, Co, Ni, Mn, Mg, Cu, Zn, Al, Sn, B, Ga, Cr, Sr, V, and Ti, and 0≤y≤1, 0≤x≤1, 0≤z≤1, and x+y+z≤1. Preferably, the lithium-ion battery has a charging cut-off voltage of ≥4.3V. The non-aqueous electrolyte for lithium-ion battery provided by the present invention comprises an unsaturated phosphate ester component which contains at least two unsaturated groups. The unsaturated phosphate ester having such structural characteristics can better form a film on the cathode and the anode to effectively protect the cathode and the anode, thereby improving the high-temperature performance of the lithium-ion battery, particularly the high-temperature cycling performance. Further, as the passivation film formed by the unsaturated phosphate ester has poor conductivity and high impedance, which is disadvantageous for improving the low-temperature performance of the battery, the present invention also adds lithium difluorophosphate to the non-aqueous electrolyte for lithium-ion battery. The lithium difluorophosphate itself has no film forming effect, but after being mixed with the unsaturated phosphate ester containing at least two unsaturated groups, it can participate in film formation on the anode, thereby reducing the film impedance of the unsaturated phosphate ester on the anode and improving the low-temperature performance of the lithium-ion battery. In addition, we have found that while the lithium difluorophosphate itself is used to lower the impedance and improve the low-temperature performance, when it is used in combination with the unsaturated phosphate ester containing at least two unsaturated groups, it can not only improve the low-temperature performance, but also help improve the high-temperature performance of the battery further. In the non-aqueous electrolyte for lithium-ion battery according to the present invention, the lithium difluorophosphate and the unsaturated phosphate ester containing at least two unsaturated groups, used in combination, can reduce the impedance of the lithium-ion battery and further improve the high-temperature performance of the battery, thereby imparting the lithium-ion battery better low-temperature performance and high-temperature cycling performance.The lithium-ion battery provided by the present invention has better high-temperature cycling performance and low-temperature cycling performance at the same time, thanks to the above-mentioned non-aqueous electrolyte.

### Detailed Description

In order to make the technical problems to be solved, the technical solutions and the beneficial effects of the present invention more clear, the present invention will be further described in detail below with reference to the embodiments. It is understood that the specific embodiments described herein are merely illustrative of the invention and are not intended to limit the invention.Embodiments of the invention provide a non-aqueous electrolyte for lithium-ion battery, comprising a non-aqueous organic solvent, a lithium salt and an additive, the additive comprising an unsaturated phosphate ester represented by the following structural formula A and lithium difluorophosphate, 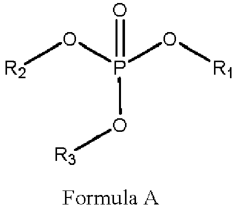 wherein in formula A, R₁ and R₂ are independently a C2-C5 unsaturated hydrocarbon group, and R₃ is one of a C1-C6 saturated hydrocarbon group, a C1-C6 unsaturated hydrocarbon group, and a fluorohydrocarbon group. Specifically, the unsaturated phosphate ester has a good high-temperature cycling performance, but the passivation film formed by the unsaturated phosphate ester on the cathode and the anode of the battery has poor conductivity, high impedance, and poor battery low-temperature performance. In the non-aqueous electrolyte of the lithium-ion battery of the embodiments of the present invention, an unsaturated phosphate ester and lithium difluorophosphate (LiPO₂F₂) are added at the same time, wherein the unsaturated phosphate ester is selected to contain at least two unsaturated substituents. Specifically, R₁ and R₂ are independently a C2-C5 (having a carbon number of 2 to 5) unsaturated hydrocarbon group, and R₃ is one of a C1-C6 (having a carbon number of 1 to 6) saturated hydrocarbon group, a C1-C6 (having a carbon number of 1 to 6) unsaturated hydrocarbon group, and a fluorohydrocarbon group.

The unsaturated phosphate ester having the above structural features has, on the one hand, a good film-forming effect and improves the high-temperature performance of the lithium-ion battery, and on the other hand, only the unsaturated phosphate ester having the structural features can work in combination with the lithium fluorophosphate to reduce the impedance of the unsaturated phosphate ester on the anode of the lithium-ion battery, thereby imparting good high- and low-temperature performances to the lithium-ion battery.Further preferably, the unsaturated phosphate ester includes compounds represented by the following structures 1-5,

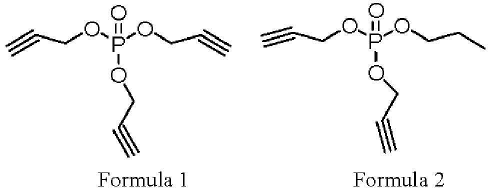

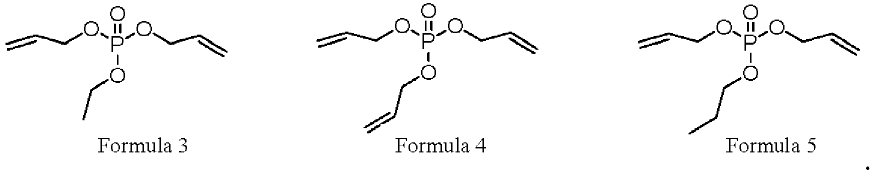

The structure of the preferred unsaturated phosphate ester can complex with the lithium difluorophosphate so that the two compounds can better complement with each and play a synergistic effect, thereby enhancing the high- and low-temperature cycling performances of the lithium-ion battery. Of course, it is appreciated that the specific type of the unsaturated phosphate ester is not limited thereto. Further preferably, the unsaturated phosphate ester is present in an amount of from 0.1 to 2% by weight assuming the total weight of the non-aqueous electrolyte for lithium-ion battery to be 100%. When the content of the unsaturated phosphate ester is less than 0.1%, it has a poor film-forming effect on the cathode and the anode, and the high-temperature cycling performance is not improved as expected; and when the content of the unsaturated phosphate ester is more than 2%, it forms a relatively thick film at the interface of the cathode and the anode, which will seriously increase the battery impedance and degrade the battery performances.

The lithium difluorophosphate itself cannot form a good SEI film, its effect on cycling is not good, and especially the high-temperature cycling is obviously insufficient, which limits the use of the electrolyte under high temperature conditions. But in embodiments of the present invention, when lithium difluorophosphate complex with the unsaturated phosphate ester having the above structure, it can participate in film formation on the anode, and as such can effectively complement with the unsaturated phosphate ester and improve the high- and low-temperature cycling performances of the lithium-ion battery at the same time. Further preferably, the lithium difluorophosphate is present in an amount of from 0.1 to 2% by weight assuming the total weight of the non-aqueous electrolyte for lithium-ion battery to be 100%. When the content of the lithium difluorophosphate is less than 0.1%, the effect of reducing the impedance is limited, and the low-temperature performance of the battery cannot be effectively improved; and when the content is higher than 2%, not only the solubility is deteriorated, resulting in decreased battery performances, but also the high-temperature performance will be degraded. As a preferred embodiment, the non-aqueous electrolyte for lithium-ion battery further comprises an unsaturated cyclic carbonate. Particularly preferably, the unsaturated cyclic carbonate includes at least one of vinylene carbonate and vinylethylene carbonate. Further preferably, the unsaturated cyclic carbonate is present in an amount of from 0.1 to 3% by weight assuming the total weight of the non-aqueous electrolyte for lithium-ion battery to be 100%.In the embodiments of the present invention, the non-aqueous organic solvent and the lithium salt in the non-aqueous electrolyte for lithium-ion battery are not specifically defined, and any non-aqueous organic solvents and lithium salts conventional in the art can be used in the embodiments of the present invention. For example, the lithium salt includes, but is not limited to, at least one of lithium hexafluorophosphate, lithium perchlorate, lithium tetrafluoroborate, lithium bis(trifluoromethylsulfonyl)imide, and lithium difluorosulfonimide.The non-aqueous electrolyte for lithium-ion battery provided by the embodiments of the invention contains an unsaturated phosphate ester component, and the unsaturated phosphate ester contains at least two unsaturated groups, such that the unsaturated phosphate ester having such structural characteristics can better form a film on the cathode and the anode to effectively protect the cathode and the anode, thereby improving the high-temperature performance of the lithium-ion battery, particularly the high-temperature cycling performance. Further, as the passivation film formed by the unsaturated phosphate ester has poor conductivity and high impedance, which is disadvantageous for improving the low-temperature performance of the battery, the embodiments of the present invention also adds lithium difluorophosphate to the non-aqueous electrolyte for lithium-ion battery. The lithium difluorophosphate itself has no film forming effect, but after being mixed with the unsaturated phosphate ester containing at least two unsaturated groups, it can participate in film formation on the anode, thereby reducing the film impedance of the unsaturated phosphate ester on the anode and improving the low-temperature performance of the lithium-ion battery. In addition, we have found that while the lithium difluorophosphate itself is used to lower the impedance and improve the low-temperature performance, when it is used in combination with the unsaturated phosphate ester containing at least two unsaturated groups, it can not only improve the low-temperature performance, but also help improve the high-temperature performance of the battery further. In the non-aqueous electrolyte for lithium-ion battery according to the present invention, the lithium difluorophosphate and the unsaturated phosphate ester containing at least two unsaturated groups, used in combination, can reduce the impedance of the lithium-ion battery and further improve the high-temperature performance of the battery, thereby imparting the lithium-ion battery better low-temperature performance and high-temperature cycling performance. Moreover, the embodiments of the present invention further provide a lithium-ion battery, comprising a cathode, an anode, a separator disposed between the cathode and the anode, and an electrolyte, wherein the electrolyte is the non-aqueous electrolyte for lithium-ion battery described above. Specifically, the electrolyte is the non-aqueous electrolyte for lithium-ion battery described above, and is not described in detail here again for the sake of brevity. The cathode, the anode, and the separator in the lithium-ion battery are not specifically defined, and any cathodes, anodes and separators conventional in the art can be used. For example, the cathode can be selected from at least one of LiCoO₂, LiNiO₂, LiMn₂O₄, LiCo_{1-y}M_{y}O₂, LiNi_{1-y}M_{y}O₂, LiMn_{2-y}M_{y}O₄ and LiNiₓCo_{y}Mn_{z}M_{1-x-y-z}O₂; wherein M is selected from at least one of Fe, Co, Ni, Mn, Mg, Cu, Zn, Al, Sn, B, Ga, Cr, Sr, V, and Ti, and 0≤y≤1, 0≤x≤1, 0≤z≤1, and x+y+z≤1. The lithium-ion battery provided by the embodiments of the present invention has good high-temperature cycling performance and low-temperature cycling performance because it contains the above-described non-aqueous electrolyte.

The present invention will be described in greater detail in the following specific examples.

### Example 1

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 1" in Table 1 assuming the total weight of the non-aqueous electrolyte to be 100%.

### Example 2

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 2" in Table 1 assuming the total weight of the non-aqueous electrolyte to be 100%.

**Example** 3A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 3" in Table 1 assuming the total weight of the non-aqueous electrolyte to be 100%.

### Example 4

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 4" in Table 1 assuming the total weight of the non-aqueous electrolyte to be 100%.

### Example 5

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 5" in Table 1 assuming the total weight of the non-aqueous electrolyte to be 100%.

### Example 6

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 6" in Table 1 assuming the total weight of the non-aqueous electrolyte to be 100%.

### Example 7

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 7" in Table 1 assuming the total weight of the non-aqueous electrolyte to be 100%.

### Example 8

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 8" in Table 1 assuming the total weight of the non-aqueous electrolyte to be 100%.

### Example 9

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 9" in Table 1 assuming the total weight of the non-aqueous electrolyte to be 100%.

### Example 10

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Example 10" in Table 1 assuming the total weight of the non-aqueous electrolyte to be 100%.

### Comparative example 1

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Comparative example 1" in Table 1 assuming the total weight of the non-aqueous electrolyte to be 100%.

### Comparative Example 2

A LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Comparative Example 2" in Table 1 assuming the total weight of the non-aqueous electrolyte to be 100%. **Comparative Example 3A** LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Comparative Example 3" in Table 1 assuming the total weight of the non-aqueous electrolyte to be 100%. **Comparative Example 4A** LiNi_{0.5}Co_{0.2}Mn_{0.3}/artificial graphite battery was prepared comprising a cathode, an anode, a separator disposed between the cathode and the anode, and an electrolyte, wherein the electrolyte was a non-aqueous electrolyte comprising a non-aqueous organic solvent, a lithium salt and an additive, the additive being in the weight percentage shown in "Comparative Eexample 4" in Table 1 assuming the total weight of the non-aqueous electrolyte to be 100%.

The LiNi_{0.5}Co_{0.2}Mn_{0.3}/artificial graphite batteries of Examples 1-10 and Comparative Examples 1-4 of the present invention were tested for performances, the test items and test methods being as follows:High-temperature cycling performance, represented by the capacity retention rate after 1C cycling for 800 cycles at 45° C, was tested in the following method: subjecting, at 45° C, the formed battery to 1C constant current and constant voltage charging to 4.2V, with the cut-off current being 0.01C, followed by 1C constant current discharging to 3.0V. After 800 cycles of charging/discharging, the capacity retention rate after the 800^{th} cycle was calculated to evaluate the high-temperature cycling performance. The formula for calculating the capacity retention rate after 800 cycles of 1C cycling at 45° C is as follows:Capacity retention rate after the 800^{th} cycle (%) = (discharge capacity at the 800^{th} cycle / discharge capacity at the 1^{st} cycle) × 100%.(2) Low-temperature cycling performance, represented by the 0.5C discharging efficiency at -20° C, was tested in the following method: subjecting, at 25° C, the formed battery to 1C constant current and constant voltage charging to 4.2V, with the cut-off current being 0.01C, followed by 1C constant current discharging to 3.0V and recording the discharging capacity, followed by 1C constant current and constant voltage charging to 4.2V, with the cut-off current being 0.01C, followed by allowing the battery to stand in a -20° C environment for 12 hours, followed by 0.5C constant current discharging to 2.5V and recording the discharging capacity. The formula for calculating the 0.5C discharging efficiency at -20° C is as follows:Low-temperature discharging efficiency at -20° C (%) = 0.5C discharging capacity (-20° C) / 1C discharging capacity (25° C).(3) The test method of capacity retention rate and capacity recovery rate after storage at 60° C for 30 days comprised: subjecting, at a normal temperature, the formed battery to 1C constant current constant voltage charging to 4.2 V, with the cut-off current being 0.01C; followed by 1C constant current discharging to 3.0 V, at which time the initial discharge capacity of the battery was measured; followed by 1C constant current constant voltage charging to 4.2V, with the cut-off current being 0.01C; followed by storage of the battery at 60° C for 30 day; followed by 1C constant current discharging to 3.0V, at which time the retention capacity of the battery was measured; followed by 1C constant current constant voltage charging to 4.2V, with the cut-off current being 0.01C; and followed by 1C constant current discharging to 3.0 V, at which time the recovery capacity was measured. The formulas for calculating the capacity retention rate and capacity recovery rate are as follows:Battery capacity retention rate (%) = retention capacity / initial capacity × 100%; Battery capacity recovery rate (%) = recovery capacity / initial capacity × 100%. The test results are shown in Table 1 below.

**Table 1**

| | Phosphate ester | Lithium difluorophosphate (%) | VC | Capacity retention rate after 1C cycling for 800 cycles at 45°C (%) | 30 days at 60°C | | 0.5C discharge efficiency at -20°C (%) |
|---|---|---|---|---|---|---|---|
| | | | | | Retention rate (%) | Recovery rate (%) | |
| Example 1 | Tripropargyl phosphate: 0.1% | 1 | | 75.3 | 80.8 | 86.2 | 64.3 |
| Example 2 | Tripropargyl phosphate: 0.5% | 1 | | 82.6 | 90.2 | 95.7 | 63.5 |
| Example 3 | Tripropargyl phosphate: 1% | 1 | | 85.4 | 91.9 | 97.3 | 61.3 |
| Example 4 | Tripropargyl phosphate: 2% | 1 | | 80.2 | 89.3 | 94.5 | 59.8 |
| Example 5 | Tripropargyl phosphate: 0.5% | 0.1 | | 82.1 | 83.8 | 89.5 | 60.9 |
| Example 6 | Tripropargyl phosphate: 0.5% | 0.5 | | 82.4 | 86.5 | 92.3 | 61.4 |
| Example 7 | Tripropargyl phosphate: 0.5% | 2 | | 82.5 | 89.5 | 95.1 | 63.3 |
| Example 8 | Tripropargyl phosphate: 0.5% | 1 | 0.5 | 84.5 | 89.2 | 94.6 | 61.7 |
| Example 9 | Dipropargyl phosphate: 0.5% | 1 | | 82.3 | 87.9 | 92.1 | 63.7 |
| Example 10 | Triallyl phosphate: 0.5% | 1 | | 82.1 | 86.9 | 91.8 | 63.8 |
| Comparative Example 1 | Tripropargyl phosphate: 0.5% | | | 73.5 | 80.1 | 85.9 | 55.2 |
| Comparative Example 2 | | 1 | | 50.2 | 65.3 | 71.9 | 64.1 |
| Comparative Example 3 | Triethyl phosphate: 0.5% | 1 | | 50.4 | 65.1 | 71.4 | 63.5 |
| Comparative Example 4 | Diethylpropargyl phosphate: 0.5% | 1 | | 65.3 | 71.7 | 77.4 | 63.3 |

In the above Table 1, comparing Examples 1-10 with Comparative Example 1, the non-aqueous electrolytes in Examples 1-10 and Comparative Example 1 were added with a phosphate ester containing at least two unsaturated groups, but the non-aqueous electrolytes in Examples 1-10 were also added with lithium difluorophosphate, while the non-aqueous electrolyte in Comparative Example 1 didn't contain no lithium difluorophosphate. The results showed that Examples 1-10 containing both a phosphate containing at least two unsaturated groups and lithium difluorophosphate had good high-temperature cycling performance and low-temperature cycling performance at the same time; and while Comparative Example 1 not containing lithium difluorophosphate had a relatively good high-temperature performance, the low-temperature performance was obviously poor. It can be seen that the addition of lithium difluorophosphate can significantly improve the low-temperature cycling performance.

Comparing Examples 1-10 with Comparative Example 2, the non-aqueous electrolytes in Examples 1-10 and Comparative Example 2 were all added with lithium difluorophosphate, but the non-aqueous electrolytes in Examples 1-10 were also added with a phosphate ester containing at least two unsaturated groups, while the non-aqueous electrolyte in Comparative Example 1 didn't contain a phosphate ester containing at least two unsaturated groups. The results showed that Examples 1-10 containing both a phosphate containing at least two unsaturated groups and lithium difluorophosphate had good high-temperature cycling performance, high-temperature storage performance and low-temperature cycling performance at the same time; and while Comparative Example 2 not containing a phosphate ester containing at least two unsaturated groups had a relatively good low-temperature performance, the high-temperature performance was obviously poor. It can be seen that the addition of a phosphate ester containing two unsaturated groups can significantly improve the high-temperature cycling performance. According to the test results of Example 1 versus Comparative Example 1 and Comparative Example 2, it can be seen that in comparison to the electrolyte only added with lithium difluorophosphate or a phosphate containing two unsaturated groups, the electrolyte containing both a phosphate containing two unsaturated groups and lithium difluorophosphate not only retained the advantages of lithium difluorophosphate improving the low-temperature performance and the phosphate containing two unsaturated groups improving the high-temperature performance, but also the high-temperature performance of the electrolyte was further enhanced due to the synergy of the lithium difluorophosphate and the phosphate containing two unsaturated groups, in comparison to the electrode only added with the phosphate containing two unsaturated groups.Comparing Examples 1-10 with Comparative Example 3, the non-aqueous electrolytes in Examples 1-10 were added with a phosphate containing at least two unsaturated groups and lithium difluorophosphate, while the non-aqueous electrolytes in Comparative Example 3 was only added with a saturate phosphate ester. The results showed that Examples 1-10 containing both a phosphate containing at least two unsaturated groups and lithium difluorophosphate had good high-temperature cycling performance and low-temperature cycling performance at the same time; and while Comparative Example 3 containing only a saturated phosphate ester had a relatively good low-temperature performance, the high-temperature performance was poor. It can be seen that the addition of a saturated phosphate ester had a limited effect on improving the high-temperature cycling performance. Comparing Example 1-10 with Comparative Example 4, the non-aqueous electrolytes in Examples 1-10 were added with a phosphate ester containing at least two unsaturated groups and lithium difluorophosphate, while the non-aqueous electrolyte in Comparative Example 4 was added with a phosphate ester containing one unsaturated group and lithium difluorophosphate. The results showed that Examples 1-10 containing both a phosphate containing at least two unsaturated groups and lithium difluorophosphate had good high-temperature cycling performance and low-temperature cycling performance at the same time; and while Comparative Example 4 added with a phosphate ester containing only one unsaturated group had a relatively good low-temperature performance, the high-temperature performance was poor, suggesting the necessity of the presence of two unsaturated groups in the phosphate ester for improving the high-temperature cycling performance.It can be seen that the lithium-ion batteries prepared by the non-aqueous electrolytes containing both a phosphate ester containing at least two unsaturated groups and lithium difluorophosphate provided by Examples 1-10 of the present invention had good high-temperature performance and small impedance, and also had good high-temperature cycling performance and low-temperature cycling performance at the same time.The above is only the preferred examples of the present invention, and is not intended to limit the present invention. Any modifications, equivalent substitutions and improvements made within the spirit and principle of the present invention should be deemed to be included in the scope of protection of the present invention.

## Claims

1. A non-aqueous electrolyte for lithium-ion battery, comprising a non-aqueous organic solvent, a lithium salt and an additive, wherein the additive comprises an unsaturated phosphate ester represented by the following structural formula A and lithium difluorophosphate, 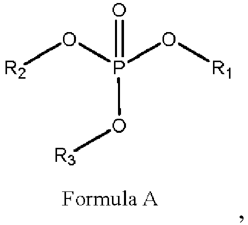 wherein in the formula A, R₁ and R₂ are independently a C2-C5 unsaturated hydrocarbon group, and R3 is one of a C1-C6 saturated hydrocarbon group, a C1-C6 unsaturated hydrocarbon group, and a fluorohydrocarbon group.

2. The non-aqueous electrolyte for lithium-ion battery according to claim 1, wherein the unsaturated phosphate ester is a compound represented by structural formula selected from formulas 1 to 5:

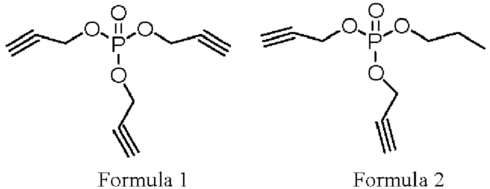

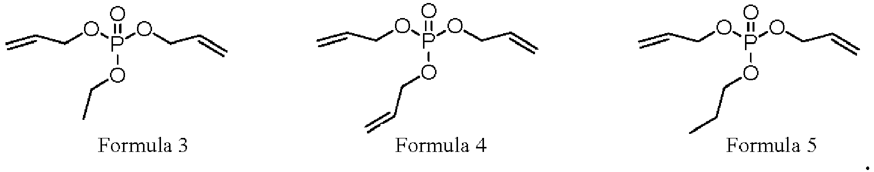

3. The non-aqueous electrolyte for lithium-ion battery according to claim 1, wherein the unsaturated phosphate ester is present in an amount of from 0.1 to 2% by weight assuming the total weight of the non-aqueous electrolyte for lithium-ion battery to be 100%.

4. The non-aqueous electrolyte for lithium-ion battery according to claim 1, wherein the lithium difluorophosphate is present in an amount of from 0.1 to 2% by weight assuming the total weight of the non-aqueous electrolyte for lithium-ion battery to be 100%.

5. The non-aqueous electrolyte for lithium-ion battery according to any one of claims 1-4, further comprising an unsaturated cyclic carbonate.

6. The non-aqueous electrolyte for lithium-ion battery according to claim 5, wherein the unsaturated cyclic carbonate includes at least one of vinylene carbonate and vinylethylene carbonate.

7. The non-aqueous electrolyte for lithium-ion battery according to claim 5, wherein the unsaturated cyclic carbonate is present in an amount of from 0.1 to 3% by weight assuming the total weight of the non-aqueous electrolyte for lithium-ion battery to be 100%.

8. A lithium-ion battery, comprising a cathode, an anode, a separator disposed between the cathode and the anode, and an electrolyte, wherein the electrolyte is the non-aqueous electrolyte for lithium-ion battery according to any one of claims 1-7.

9. The lithium-ion battery according to claim 8, wherein the cathode includes a positive active material selected from at least one of LiCoO₂, LiNiO₂, LiMn₂O₄, LiCo_{1-y}M_{y}O₂, LiNi_{1-y}M_{y}O₂, LiMn_{2-y}M_{y}O₄ and LiNiₓCo_{y}Mn_{z}M_{1-x-y-z}O₂; wherein M is selected from at least one of Fe, Co, Ni, Mn, Mg, Cu, Zn, Al, Sn, B, Ga, Cr, Sr, V, and Ti, and 0≤y≤1, 0≤x≤1, 0≤z≤1, and x+y+z≤1.

10. The lithium-ion battery according to claim 8 or 9, wherein the lithium-ion battery has a charging cut-off voltage of ≥4.3V.
